(19) **Europäisches Patentamt**
**European Patent Office**
**Office européen des brevets**

(11) **EP 2 071 511 A1**

(12) **EUROPEAN PATENT APPLICATION**

(43) Date of publication:
**17.06.2009 Bulletin 2009/25**

(51) Int Cl.:
**G06T 3/40** (2006.01)     **G06T 5/00** (2006.01)
**G06K 9/32** (2006.01)

(21) Application number: **07301669.3**

(22) Date of filing: **13.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Thomson Licensing**
**92100 Boulogne-Billancourt (FR)**

(72) Inventors:
• **Chen, Zhi Bo**
**100085 Beijing (CN)**

• **Gu, Xiao Dong**
**100085 Beijing (CN)**
• **Chen, Qu Qing**
**100085 Beijing (CN)**

(74) Representative: **Le Dantec, Claude**
**Thomson,**
**46, Quai Alphonse Le Gallo**
**92100 Boulogne-Billancourt (FR)**

(54) **Method and device for generating a sequence of images of reduced size**

(57)     The present invention relates to a method for processing an image made up of pixels each of which being associated with at least one image data. The method comprises step of
determining (100) one region of interest, called first region of interest, in the image on the basis of the image data associated to the pixels of the image;
selecting (110) one region of interest, called second region of interest, in the image on the basis of semantic information;
generating (120, 130, 140, 150) an image of reduced size on the basis of the first and second regions of interest.

FIGURE 2

**Description**

FIELD OF THE INVENTION

The present invention relates to a method and a device for image processing. More particularly, the invention relates to a method and a device adapted for generating an image of reduced size from an original image. The image processing method according to the invention is advantageously applied to images of a video. The invention furthermore relates to a method of adaptive video presentation on small displays.

BACKGROUND OF THE INVENTION

In the multimedia application area, a variety of new mobile devices, such as Pocket PC, Smartphone, SPOT watch, Tablet PC, personal digital assistant devices, etc, are growing popular in people's daily life. These devices are becoming more and more powerful in both numerical computing and data storage. Moreover, people have become enthusiastic to watch videos through these mobile devices.

However, low bandwidth connection and small display are still two serious obstacles that have undermined the usefulness of these devices in people's daily life. Though a few commercial video players such as Windows Media Player and PocketTV have been developed to enable users to browse videos from small-form factor devices, the limited bandwidth and small window size remain to be two critical obstacles. With the rapid and successful development of 2.5G and 3G wireless networks, the bandwidth factor is expected to be less constraint in the near future. While at the same time the limitation on display size is likely to remain unchanged for a certain period of time.

There has been some existing work focusing on the topic of displaying images on mobile devices. They can calculate and provide an optimal image viewing path based on the image attention model to simulate the human viewing behaviours. Since most of the valuable information is presented by videos, improving the experience of video viewing on small displays is very important to unleash the power of these mobile devices.

The paper from X. Fan et al entitled "Looking into Video Frames on Small Displays", ACM MM'03, 2003 disclose content repurposing systems able to automatically detect regions of interest in the video and to process these regions of interest in order to generate a video of reduced size to be displayed on a small display. Such solutions provide the user with much better viewing experience.

However, such a method is not very efficient for real applications. Indeed, in a real case, the automatic method does not consider any semantic information in the video. For example, when processing a video wherein a famous politician is present, such a method may automatically crop him if some other regions of interest are present in the video.

SUMMARY OF THE INVENTION

The present invention provides a method for image processing adapted to generate a video of reduced size from an original image. The video of reduced size is advantageously displayed on display devices with small size to provide an optimal video viewing experience for users.

More particularly, the invention relates to a method for processing an image made up of pixels each of which being associated with at least one image data. The method comprises the steps of:

> determining one region of interest, called first region of interest, in the image on the basis of the image data associated to the pixels of the image;
> selecting one region of interest, called second region of interest, in the image on the basis of semantic information;
> generating an image of reduced size on the basis of the first and second regions of interest.

In an embodiment, the step of generating an image of reduced size comprises the steps of:

> determining a gravity center for the first region of interest, called first gravity center, and a gravity center for the second region of interest, called second gravity center;
> computing a spatial distance between the first gravity center and the second gravity center; and
> generating an image of reduced size on the basis of at least one of the first and second regions of interest according to a function of the spatial distance.

Advantageously, the image of reduced size is the second region of interest if the spatial distance is below a predefined threshold.

Advantageously, the image of reduced size is generated on the basis of the first and second regions of interest if the spatial distance is above the predefined threshold.

Advantageously, the image of reduced size is generated as a rectangle bounding the first and second regions of interest.

The invention further relates to an adaptive video presentation method for automatically presenting an original video made up of images of large size on a smaller display, the images being made up of pixels each of which being associated with at least one image data. The method comprises the steps of:

> splitting the video into scenes;
> generating an image of reduced size, for each image of the video, as follows:

if the image is not the first image of the scene, processing the image with the processing method previously defined;

otherwise, determining a region of interest in the image on the basis of the image data associated with the pixels of the image and generating the image of reduced size as the rectangle bounding the region of interest;

presenting the video made up of the images of reduced size on the smaller display size.

The invention relates to a video processing device for processing an image made up of pixels each of which being associated with at least one image data comprising:

- a video processing module adapted for determining at least one region of interest, called first region of interest, in each image of the video on the basis of the image data associated to the pixels of the image;
- a manually indicated region module (MIR) adapted for selecting one region of interest, called second region of interest, in images of the video on the basis of semantic information;
- a merging module (MERGE) adapted for generating an image of reduced size for each image of the video on the basis of at least one of the first and second regions of interest.

Advantageously, the merging module (MERGE) is adapted:

- to determine a gravity center for the first region of interest, called first gravity center, and a gravity center for the second region of interest, called second gravity center
- to compute a spatial distance between the first gravity center and the second gravity center ; and
- to generate an image of reduced size on the basis of at least one of the first and second regions of interest according to a function of the spatial distance.

## BRIEF DESCRIPTION OF DRAWINGS

Other features and advantages of the invention will appear with the following description of some of its embodiments, this description being made in connection with the drawings in which:

- Fig. 1 is a flowchart of the image processing method according to the invention;
- Fig. 2 is an example of generation of an image of reduced size;
- Fig. 3 is a video processing device according to the invention;
- Fig. 4 is a video processing device according to a variant of the invention; and
- Fig. 5 is a flowchart of the video processing method according to the invention.

## DETAIL DESCRIPTION OF PREFERRED EMBODIMENTS

The present invention directs to an image processing method and an image processing device adapted to generate an image of reduced size from an original image. An image is made up of pixels to each of which at least one image data (e.g. luminance value, possibly chrominance values) is associated.

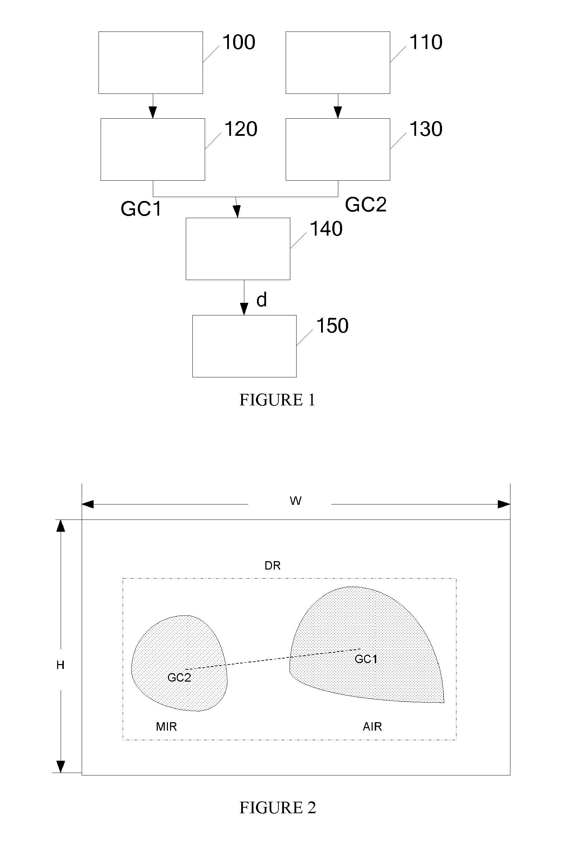

Figure 1 is a flowchart of the image processing method according to the invention.

At step 100, one region of interest, called first region of interest and denoted ROI1, is determined in an image on the basis of image data associated to the pixels of the image. The step 100 is automatic, i.e. it does not require any operator intervention. Such a region of interest is determined by first computing attention area information such as saliency maps. The method described in the European patent application EP 04804828.4 published on the 30th of June 2005 under the number 1695288 can be used to generate such saliency maps. A region of interest in the image is determined automatically based on the associated saliency map for example by selecting the part of the image comprised in a rectangle of predefined size centered on the most conspicuous pixel, i.e. the pixel whose saliency value is the highest. Any other solution can be used, for example, the solution described in the European patent application EP 06117768.9 published on the 31th of January 2007 under the number 1748385.

At step 110, another region of interest, called second region of interest and denoted ROI2 is selected by an operator on the basis of semantic information. Semantic information is opposed to low level information such as color, texture, motion. Such low level features do not properly address the richness of video data. Advantageously, by introducing high level semantic information, especially *a priori* information that an operator has on an image (e.g. the fame of a specific person in the image, or the targeted application), the whole method is improved especially in real cases. The step 110 makes it possible to select regions that are discarded at step 100 because they are not salient with respect to image data while they comprise high semantic information. Such a region is for example a well known politician present in the video sequence among many others unknown people or any operator preferred area in the video. Indeed, it is not possible to identify that the politician is a region of interest compared to others people by automatically processing the image data without any external information, i.e. the knowledge of the operator. Step 110 may be done in a parallel of step 100 or after step 100 or before step 100.

According to the invention, an image of reduced size is generated on the basis of the information provided at step 100 and 110. By selecting a region of interest also on the basis of semantic information, the invention makes it possible to introduce *a priori* information of the image content such as the fame of a people in an image. According to a specific embodiment, the image of reduced size is generated as described in the following section.

At step 120, the gravity center GC1 of the first region of interest, called first gravity center is determined. The gravity center GC1 of the first region of interest is the center of a bounding box surrounding the first region of interest. According to a variant, the gravity center GC 1 of the first region of interest is determined by the weighted average of coordinates inside region of interest, the weight can be the same for whole region or calculated from saliency map.

At step 130, the gravity center GC2 of the second region of interest, called second gravity center is determined. The gravity center GC2 of the second region of interest is the center of a bounding box surrounding the second region of interest. According to a variant, the gravity center GC2 of the second region of interest is determined by the weighted average of coordinates inside region of interest, the weight can be the same for whole region or calculated from saliency map.

At step 140, the spatial distance d between the first and second gravity centers GC1 and GC2 is computed for example as follows:

$$d = \sqrt{\left(x_{GC1} - x_{GC2}\right)^2 + \left(y_{GC1} - y_{GC2}\right)^2}$$

where: - $(x_{GC1}; y_{GC1})$ are the coordinates of the first gravity center GC1; and
- $(x_{GC2}; y_{GC2})$ are the coordinates of the first gravity center GC2.

At step 150, the reduced image is generated according to a function of the spatial distance computed at step 140 as follows:

- If d<T, then the reduced image is the second region of interest ROI2;
- Otherwise, i.e. if d>T, then the reduced image DR is the image region delimited by a rectangle bounding the first and second regions of interest ROI1 and ROI2 as depicted on figure 2.

T is a threshold predefined on the basis of the original image width, height and the original image content.

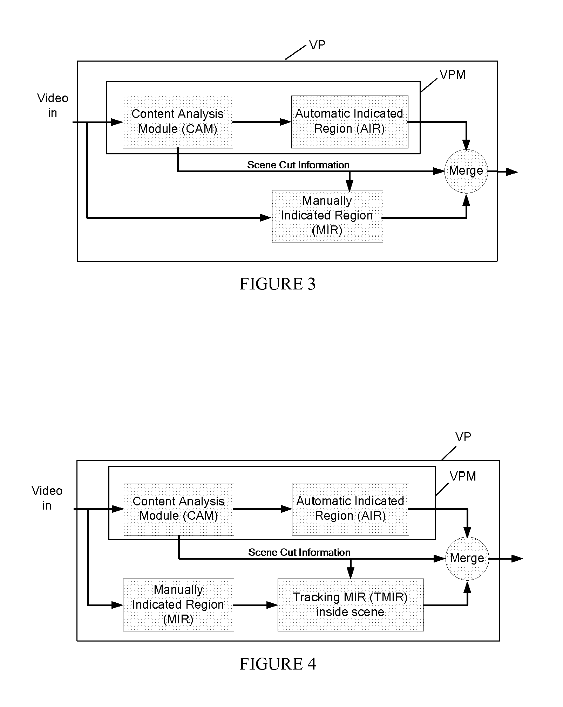

According to another aspect of the invention the method depicted on figure 1 is adapted to generate a video of reduced size from an original video. A video is made up of consecutive video scenes, i.e. sequence of images, separated by scene cuts. Figure 3 is a video processing device according to the invention. The video processing device VP, takes as input an original video made of scenes separated by scene cuts. The device according to the invention comprises a video processing module VPM adapted for determining at least one region of interest in each image of the video and further adapted to determine scene cuts in the video, i.e. splitting the video into scenes. According to a specific embodiment, the video processing module VPM is made up of two modules:

- a content analysis module CAM; and
- an automatic indicated region module AIR.
  The module CAM is adapted to determine attention area information (such as saliency maps) for each image of the original video on the basis of luminance values. It may further be adapted to detect scene cuts in the original video. The CAM module may further achieve content and/or motion analysis. The attention area information determined by the CAM module is then transmitted to the input of an automatic indicated region module AIR. The AIR module automatically generates regions of interest based on attention area information determined by the CAM module possibly with consideration of motion activity and gravity of regions of interest within the original video.
  The original video is further transmitted at the input of a manually indicated region module MIR. This module MIR can be a device to capture the input of a manually operation made on the original video, indicating the regions, called manually indicated region, in one image which is of interest for an operator, i.e. that contain high semantic information. The manually indicated region can be generated by a user using for example a Digital Mouse Pen. The operator can use the digital mouse pen to draw a circle or an area on the screen to indicate the region needed to be displayed on the small display device. The outputs (i.e. automatically determined regions of interest and scene cut information) of the VPM and MIR (i.e. manually indicated regions of interest) modules are transmitted to a module MERGE. The module MERGE generates the video of reduced size on the basis of the received information and transmits the reduced video to an encoding device for further processing.

According to a variant depicted on figure 4, the output of the MIR module, i.e. manually indicated regions of interest, is transmitted to the input of a tracking module TMIR. The module TMIR tracks the selected region within a video scene. Any existed tracking method can be used by the TMIR module. An example of such a tracking method is given in the document from Gustafsson et al entitled Particle filters for positioning, navigation and tracking, published in IEEE Trans. Signal Process. in February 2002. Another example of such a tracking method is given in the document from Comaniciu et al. entitled kernel-based object tracking, published in IEEE trans. on PAMI, in May 2003 or in the document from Arulampalam et al.

entitled A tutorial on particle filters for online nonlinear/non-gausssian Bayesian tracking, published in IEEE Trans. on Signal Processing in February 2002. This module TMIR makes it possible to limit the intervention of the operator. Indeed, the operator may select a region of interest on a first image of video scene and the selected region is automatically tracked along this scene. The outputs (i.e. automatically determined regions of interest and scene cut information) of the VPM and TMIR (i.e. manually selected regions of interest) modules are transmitted to a module MERGE. The module MERGE generates the video of reduced size on the basis of the received information and transmits the reduced video to an encoding device for further processing. More precisely, an image of reduced size is generated for each image of the original video and the succession of the images of reduced size forms the reduced video.

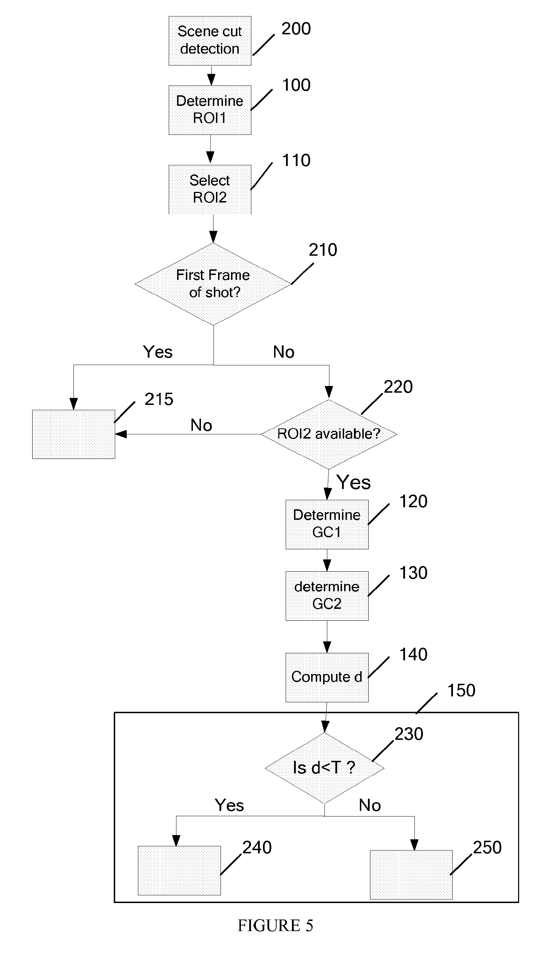

Figure 5 is a flowchart of a video processing method implemented by the video processing device VP according to the invention.

At step 200, the scene cuts are determined in the video and therefrom the video scenes by the module VPM.

At step 100, at least one region of interest, called first region of interest and denoted ROI1, is determined by the module VPM for a current image of the video on the basis image data associated to each pixel of the image. This step is identical to the step 100 described above with reference to figure 1.

At step 110, another region of interest ROI2, called second region of interest, that comprises high semantic information is possibly selected by an operator in the current image through the module MIR. This step 110 applies only if appropriate. Indeed, if a current image does not comprise any region of high semantic information then no second region of interest is selected for this image. This step is identical to the step 110 described above with reference to figure 1.

At step 210, a first test is made by the MERGE module to determine if a current image is the first image of a video scene.

If the current image is the first image of a video scene, then at step 215, the MERGE module generates the reduced image of the reduced video by extracting the first region of interest ROI1.

If the current image is not the first image of a video scene, then at step 220, a second test is made in the MERGE device to determine if a second region of interest, i.e. a region of high semantic information, has been selected at step 110 for the current image. If only the first region of interest has been determined for the current image then at step 215, the MERGE module generates the reduced image of the reduced video by extracting the first region of interest.

Otherwise (i.e. the current image is not the first image of a video scene and a second region of interest ROI2 has been selected at step 110), the gravity centers GC 1 and GC2 of the first and second regions of interest respectively are computed according to step 120 and 130 by the MERGE module. Then the spatial distance d between both gravity centers is computed according to step 140 by the MERGE module.

At step 150, the reduced image is therefore generated by the MERGE module according to a function of the spatial distance computed at step 140. More precisely, at step 230, a third test is made by the MERGE module to determine if the distance d is higher or lower than a predefined threshold T. as follows:

If $d<T$, then the reduced image is the second region of interest ROI2 (step 240);
Otherwise, i.e. if $d>T$, then the reduced image is a rectangle bounding the first and second region of interest as depicted on figure 2 (step 250).

According to a variant of step 250, if $d>T$ the reduced image is a rectangle bounding only the second region of interest.

According to another variant of step 250, if $d>T$ and in case of a long scene and stable regions of interest in the scene, the reduced image may be defined as a rectangle bounding either the first or the second region of interest, the selection being made by switching from one to the other along the scene.

T is a threshold predefined on the basis of the original image width and height, the video content (e.g. sport, movie, news, etc) and possibly on the basis of some other features like motion activity.

**Claims**

1. A method for processing an image made up of pixels each of which being associated with at least one image data, comprising step of
   determining (100) one region of interest, called first region of interest, in said image on the basis of the image data associated to the pixels of said image;
   the method being **characterized in that** it further comprises the steps of:

   selecting (110) one region of interest, called second region of interest, in said image on the basis of semantic information;
   generating (120, 130, 140, 150) an image of reduced size on the basis of said first and second regions of interest.

2. A method according to claim 1, wherein the step of generating (120, 130, 140, 150) an image of reduced size comprises the steps of:

   determining (120, 130) a gravity center for said first region of interest, called first gravity center, and a gravity center for said second region of interest, called second gravity center;
   computing (140) a spatial distance between said first gravity center and said second gravity center; and
generating (150) an image of reduced size on the basis of at least one of said first and second regions of interest according to a function of said spatial distance.

3. A method according to claim 2, wherein the image of reduced size is the second region of interest if the spatial distance is below a predefined threshold.

4. A method according to claim 3, wherein the image of reduced size is generated on the basis of said first and second regions of interest if the spatial distance is above the predefined threshold.

5. A method according to claim 4, wherein the image of reduced size is generated as a rectangle bounding said first and second regions of interest.

6. An adaptive video presentation method for automatically presenting an original video made up of images of large size on a smaller display, the images being made up of pixels each of which being associated with at least one image data, the method being **characterized in that** it comprises the steps of:

   splitting the video into scenes;
   generating an image of reduced size, for each image of the video, as follows:

   if the image is not the first image of the scene, processing said image with the method according to any of the claims 1 to 5; otherwise, determining a region of interest in said image on the basis of the image data associated with the pixels of said image and generating the image of reduced size as the rectangle bounding said region of interest;

   presenting the video made up of the images of reduced size on the smaller display size.

7. A video processing device for processing an image made up of pixels each of which being associated with at least one image data comprising:

   - a video processing module (VPM) adapted for determining at least one region of interest, called first region of interest, in each image of the video on the basis of the image data associated to the pixels of said image;
   the device being **characterized in that** it further comprises:
   - a manually indicated region module (MIR) adapted for selecting one region of interest, called second region of interest, in images of the video on the basis of semantic information;

   - a merging module (MERGE) adapted for generating an image of reduced size for each image of the video on the basis of at least one of said first and second regions of interest.

8. A video processing device according to claim 7, wherein the merging module (MERGE) is adapted:

   - to determine a gravity center for said first region of interest, called first gravity center, and a gravity center for said second region of interest, called second gravity center
   - to compute a spatial distance between said first gravity center and said second gravity center; and
   - to generate an image of reduced size on the basis of at least one of said first and second regions of interest according to a function of said spatial distance.

FIGURE 1

FIGURE 2

FIGURE 3

FIGURE 4

FIGURE 5

European Patent Office

**EUROPEAN SEARCH REPORT**

Application Number

EP 07 30 1669

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/025637 A1 (SETLUR VIDYA [US] ET AL) 1 February 2007 (2007-02-01) | 1-5,7,8 | INV. G06T3/40 |
| Y | * pages 1-3 * | 6 | G06T5/00 G06K9/32 |
| Y,D | EP 1 748 385 A (THOMSON LICENSING [FR]) 31 January 2007 (2007-01-31) * paragraphs [0003], [0004], [0022], [0025]; figure 7 * | 1,6,7 | |
| Y | EP 1 322 104 A (EASTMAN KODAK CO [US]) 25 June 2003 (2003-06-25) * paragraph [0019] * | 1,7 | |
| A | WO 00/79485 A (PRESENTER COM [US]) 28 December 2000 (2000-12-28) * page 3 * | 6 | |
| A | AVIDAN S ET AL: "Seam carving for content-aware image resizing" ACM TRANSACTIONS ON GRAPHICS ACM USA, vol. 26, no. 3, July 2007 (2007-07), pages 1-09, XP007904203 ISSN: 0730-0301 * page 10.2 * | 1-8 | TECHNICAL FIELDS SEARCHED (IPC) G06T G06K |

The present search report has been drawn up for all claims

| Place of search | Date of completion of the search | Examiner |
|---|---|---|
| Munich | 6 March 2008 | Krawczyk, Grzegorz |

## ANNEX TO THE EUROPEAN SEARCH REPORT
## ON EUROPEAN PATENT APPLICATION NO.

EP 07 30 1669

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2008

| Patent document cited in search report | | Publication date | Patent family member(s) | | Publication date |
|---|---|---|---|---|---|
| US 2007025637 | A1 | 01-02-2007 | NONE | | |
| EP 1748385 | A | 31-01-2007 | NONE | | |
| EP 1322104 | A | 25-06-2003 | FR | 2833132 A1 | 06-06-2003 |
| | | | JP | 2003219149 A | 31-07-2003 |
| | | | US | 2003103247 A1 | 05-06-2003 |
| WO 0079485 | A | 28-12-2000 | AU | 4801300 A | 09-01-2001 |

EPO FORM P0459

For more details about this annex : see Official Journal of the European Patent Office, No. 12/82

**EP 2 071 511 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 04804828 A
- EP 06117768 A
- EP 1748385 A

**Non-patent literature cited in the description**

- **X. FAN et al.** Looking into Video Frames on Small Displays. *ACM MM'03,* 2003
- **GUSTAFSSON et al.** Particle filters for positioning, navigation and tracking. *IEEE Trans. Signal Process.,* February 2002
- **COMANICIU et al.** kernel-based object tracking. *IEEE trans. on PAMI,* May 2003
- **ARULAMPALAM et al.** A tutorial on particle filters for online nonlinear/non-gausssian Bayesian tracking. *IEEE Trans. on Signal Processing,* February 2002